# EUROPEAN PATENT SPECIFICATION

(11) **EP 0 425 157 B1**
(45) Date of publication and mention of the grant of the patent: **22.09.1993**
(21) Application number: 90311287.8
(22) Date of filing: 16.10.1990
(51) Int. Cl.: F02N 15/04, F16H 1/28

(54) **Torque limiter**
Momentbegrenzer
Limiteur de couple

(30) Priority: 21.10.1989 GB 8923765
(43) Date of publication of application: 02.05.1991
(73) Proprietor: MAGNETI MARELLI ELECTRICAL LIMITED, Hall Green Birmingham B28 8SN (GB)
(72) Inventor: Young, Donald Allen, Sutton Coldfield, West Midlands, B74 4PX (GB); Squires, Christopher Peter, Great Barr, Birmingham, B43 7TA (GB)
(74) Representative: Carpenter, David

(56) References cited:
- EP-A- 0 375 396
- WO-A-89/12742
- DE-A- 2 654 987
- DE-U- 8 426 089
- FR-A- 2 521 641

## Description

This invention relates to a torque limiting device for use in a starter motor for an internal combustion engine.

It is known that a starter motor may be subjected to occasional, peak, torque loadings during operation, for example when an engine being cranked, notably a diesel engine, fires. Such peak loadings can give rise to damage to the starter motor, particularly where the starter motor is of the pre-engaged type, and even more particularly where the starter motor includes an epicyclic gear reduction mechanism. Whilst it would be possible to produce a starter motor sufficiently robust to withstand such peak loadings it is more convenient to incorporate a torque limiting device which, at predetermined torque loading, slips thereby avoiding the application of torque loadings above the predetermined value to the drive arrangement of the starter motor. Known starter motor torque limiting devices include spring loaded ratchet mechanisms of the kind disclosed in European Patent Application 0127372 and friction clutch devices of the kind disclosed in United States Patent 4635489. Such known arrangements are somewhat bulky and mechanically complex and it is an object of the present invention to provide a starter motor torque limiting device in a more simple and convenient form.

EP-A-375396 discloses a starter motor having a shock absorbing arrangement incorporating resilient elements which are distorted between relatively movable components so as to absorb shock loadings. The resilient elements are trapped in place relative to the movable components and are preferably bonded thereto such that the arrangement is a shock absorber rather than a torque limiting device.

A torque limiting device in accordance with the present invention comprises first and second relatively rotatable elements, the first element being hollow and receiving the second element therein, the outer periphery of the second element, and/or the inner periphery of the first element being of non-circular cross-section so that the radial dimension of a gap defined between the outer periphery of the second element and the inner periphery of the first element is not constant during relative angular movement of the elements, the device further including an elastic component in said gap between said first and second elements, the, or at least one of the, non-circular peripheries being slidable relative to said elastic component during normal operation of the device when the torque generating said relative angular movement exceeds a threshold value whereby said elastic component is deformed during relative angular movement of the first and second elements and so resists said relative angular movement, and after sliding movement has occurred said elements are not restored by the elastic component to their original relative position.

The invention further resides in a starter motor incorporating such a torque limiting device so as to limit torque transfer between the armature of the starter motor and the pinion gear of the starter motor.

Conveniently the device is incorporated in an epicyclic gear reduction mechanism of the starter motor.

Alternatively the device is incorporated in the axially movable pinion assembly of the starter motor.

Conveniently said gap between said first and second elements is an annular gap and said elastic component is in the form of a sleeve within which the outer periphery of said second element is received.

In the accompanying drawings,
Figure 1 is a composite longitudinal sectional view of a starter motor in accordance with one example of the present invention,
Figure 2 is an enlarged view of part of the starter motor of Figure 1 taken on the line A-A,
Figure 3 is a view similar to Figure 2 illustrating the torque limiting device in operation, Figure 4 is a transverse cross-sectional view of an elastic component of the device illustrated in Figures 1, 2 and 3,
Figure 5 is a view similar to Figure 2 of a modification,
Figure 6 is a sectional view on the line 6-6 in Figure 5,
Figure 7 is a view similar to Figure 5 of a variation thereof,
Figure 8 is a view similar to Figure 7 but illustrating an operative position of the torque limiting device,
Figure 9 is a transverse cross-sectional view of an elastic component of the device illustrated in Figures 7 and 8,
Figure 10 is a view similar to Figure 5 illustrating a further modification, and,
Figure 11 is a fragmentary, longitudinal, cross-sectional view of a pinion drive assembly of a pre-engaged starter motor.

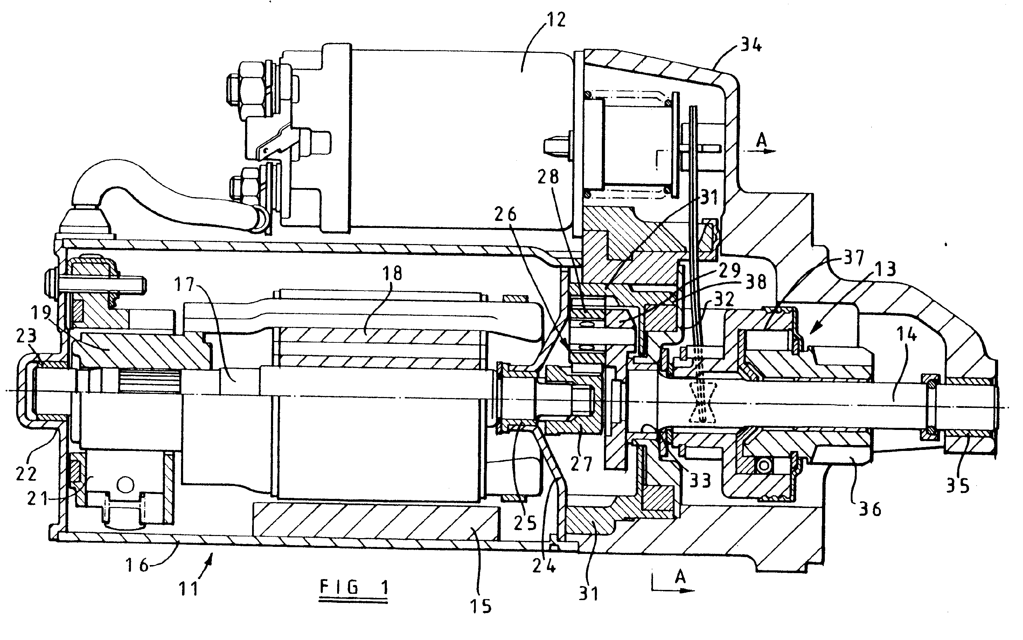

Referring first to Figures 1 to 4 of the accompanying drawings the starter motor 11 which is illustrated is of the pre-engaged type in that it has an electromagnetic actuator 12 for moving a pinion gear wheel assembly 13 axially along an output shaft 14. The electric motor of the starter motor is of the permanent magnet field type having permanent magnet poles 15 equiangularly spaced around the interior of a cylindrical, mild steel yoke 16. The yoke 16 and poles 15 define the stator of the starter motor and supported for rotation within the stator, with its axis coincident with the axis of the stator, is a rotor shaft 17 carrying a wound armature 18. The rotor shaft 17 and the output shaft 14 are positioned with their axes coextensive and at its end remote from the haft 14 the rotor shaft 17 carries a commutator which cooperates with brushes of a stationary brush assembly 21 carried by an end cap 22 closing one end of the yoke 16. The end cap 22 includes a bearing arrangement 23 rotatably supporting one end of the shaft 17.

The end of the yoke 11 remote from the commutator 19 is partially closed by a bearing support plate 24 which carries a bearing 25 rotatably supporting the end of the shaft 17 remote from the bearing 23. The shaft 17 protrudes through the bearing and carries an input, sun gear 27 of an epicyclic gear reduction mechanism 26. Equiangularly disposed around the sun gear 27 with their rotational axes parallel to the axis of the sun gear 27, and their teeth in mesh with the teeth of the gear 27 are a plurality (generally three) of planet gears 28. The stub shafts rotatably supporting the planet gears 28 are in turn carried by a planetary gear carrier 29 anchored to the innermost end of the output shaft 14.

Encircling the planet gears 28 is an annular gear 31 having internally disposed teeth meshing with the teeth of the planet gears 28.

Adjacent the planetary gear carrier 29 the shaft 14 is supported in a bearing 33 carried by a bearing plate 32. The plate 32 is supported by a nose casting 34 of the starter motor, the casting 34 being anchored to the yoke 16. Thus the plate 32 is held against movement relative to the body of the starter motor 11, and the casting 34 itself carries a bearing 35 rotatably supporting the outer end of the shaft 14. The annular gear 31 is received within the body of the starter motor for rotation relative thereto about the axis of the shafts 14 and 17 but as will be made clear hereinafter the annular gear 31 is normally held against rotation.

Assuming that the annular gear 31 cannot rotate then rotation of the shaft 17 generated by energization of the electric motor of the starter motor is transmitted to the shaft 14 by the epicyclic reduction gear mechanism 26, the shaft 14 rotating at a speed significantly less than the speed of rotation of the shaft 17. The pinion drive assembly 13 is of conventional form, and includes a pinion gear wheel 36 for meshing engagement with the toothed ring gear of the engine to be cranked, the gear wheel 36 being slidably supported on the shaft 14 for both rotational and axial movement relative thereto. Drive is transmitted to the gear wheel 36 from the shaft 14 through a uni-directional roller clutch 37 the input member of which has, in conventional form, a splined coupling to the shaft 14. Thus the pinion drive assembly comprising the gear wheel 36 and the clutch 37 can be moved axially on the shaft 14, and rotation of the shaft 14 in one direction can be transmitted by the clutch 37 to the pinion gear wheel 36 to rotate the gear wheel 36. As mentioned previously the pinion drive assembly 36 can be moved axially from a rest position to an operative position (in which the pinion gear wheel 36 approaches the bearing 35) by the solenoid 12.

When the electric motor of the starter motor is operating, and the gear wheel 36 is in meshing engagement with the ring gear of the engine to be started sudden, peak torque loadings can be imposed upon the starter motor when the engine being cranked fires. For example, a diesel engine may fire at a point in time such that the firing completely opposes the drive being transmitted by the starter motor, and in such circumstances in the absence of protective measures, damage to the starter motor, in particular the epicyclic reduction gear mechanism, can occur. In order to limit the torque which can be applied to the epicyclic reduction gear mechanism in such circumstances the bearing plate 32 and the annular gear 31 are adapted to form parts of a torque limiting device.

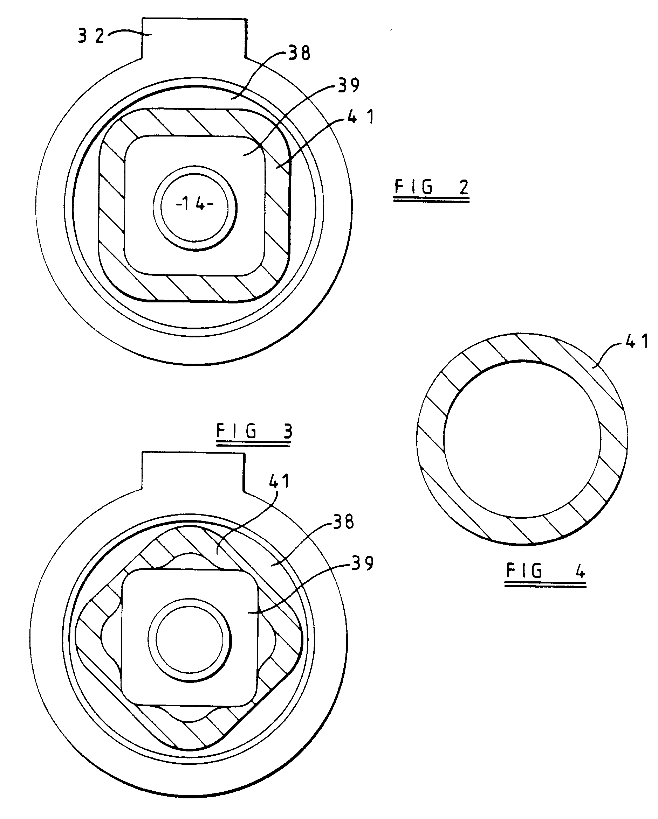

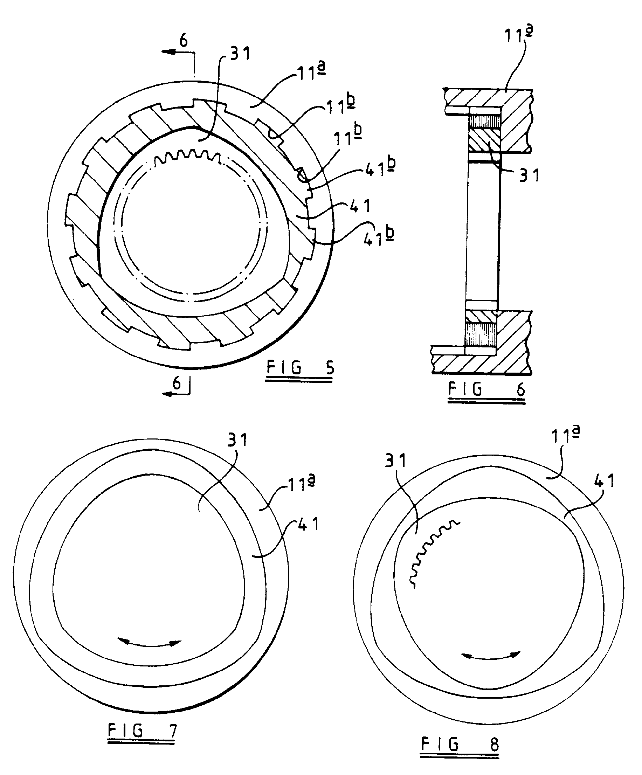

The annular gear 31 has a hollow cylindrical extension 38 projecting forwardly therefrom, the extension 38 abutting the plate 32. Although the extension 38 is externally cylindrical, it is internally square, the apices of the square recess having been rounded as is evident from Figure 2. Within the square recess of the extension 38 the plate 32 incorporates a boss 39 also of square cross-section having its apices rounded. The dimensions of the boss 39 are less than those of the recess of the extension 38 so that the boss 39 could rotate freely within the recess of the extension 38. When the boss 39 is positioned with its sides parallel to the sides of the recess of the extension 38 then an annular gap is present between the outer surface of the boss 39 and the inner surface of the extension 38. A rubber sleeve 41 occupies the gap between the boss 39 and the extension 38, the sleeve 41 being, in its rest condition, a sleeve of circular cross-section, and being as stretched slightly to fit over the boss 39. The interface of the boss 39 and the sleeve 41 and/or the interface of the sleeve 41 and the extension 38 is lubricated to permit sliding movement. Figure 3 assumes that sliding movement will take place only between the boss 39 and the sleeve 41 with the sleeve 41 remaining fixed relative to the extension 38. It is to be understood however that the opposite could be the case.

It will be recognised that any attempt to displace the boss 39 relative to the extension 38 from the position in which their sides are parallel will necessitate deformation of the elastic component defined by the sleeve 41. The effect will be similar to extrusion of the material of the sleeve 41, although of course there may not be extrusion in the true sense of the word in that there may not be fluid flow of the material of the sleeve 41. Nevertheless any attempt to displace the boss 39 relative to the extension 38 will be resiliently resisted, but not prevented, by the elastic nature of the sleeve 41. It will be apparent therefore that there will be a threshold torque value at which relative rotation between the extension 38 and the boss 39 can occur and when that value is exceeded then the annular gear 31 will rotate relative to the stationary housing of the starter motor so limiting the torque applied to the epicyclic gear mechanism.

It will apparent that if desired the sleeve 41 could be bonded to the wall of the recess in the extension 48 or could be bonded to the boss 39, or could be arranged such that slip takes place at either interface. Figure 5 illustrates a modification in which the bearing plate 32 does not form part of the device, and instead the device is defined between the housing of the starter motor and the exterior of the angular gear. In Figures 5 and 6 the housing of the starter motor is indicated by the reference numeral 11a and it can be seen that it has a cylindrical recess the wall of which is formed with a plurality of equiangularly spaced axially extending grooves 11b into which corresponding ribs 41b on the exterior of a rubber sleeve 41 fit to prevent slippage between the sleeve 41 and the body 11a. The exterior of the annular gear 31 of the gear reduction mechanism is of non-circular form, conveniently a convex sided triangular form as shown in Figure 5. The interface of the annular gear 31 and the rubber element 41 is lubricated with a suitable material which will not attack the rubber and thus the annular gear 31 can rotate within the rubber element 41. However, it can be seen that rotation of the annular gear 31 relative to the element 41 will be resiliently resisted by the element 41 since such relative rotation will involve "extrusion" of the material of the element 41 and thus as described above there will be a threshold torque value at which slippage starts to occur. Below the threshold value torque will be transmitted by the epicyclic gear mechanism, but above the threshold value the annular gear 31 will slide relative to the element 41, thus rotating within the housing 11a and limiting the torque transmitted by the gear reduction mechanism.

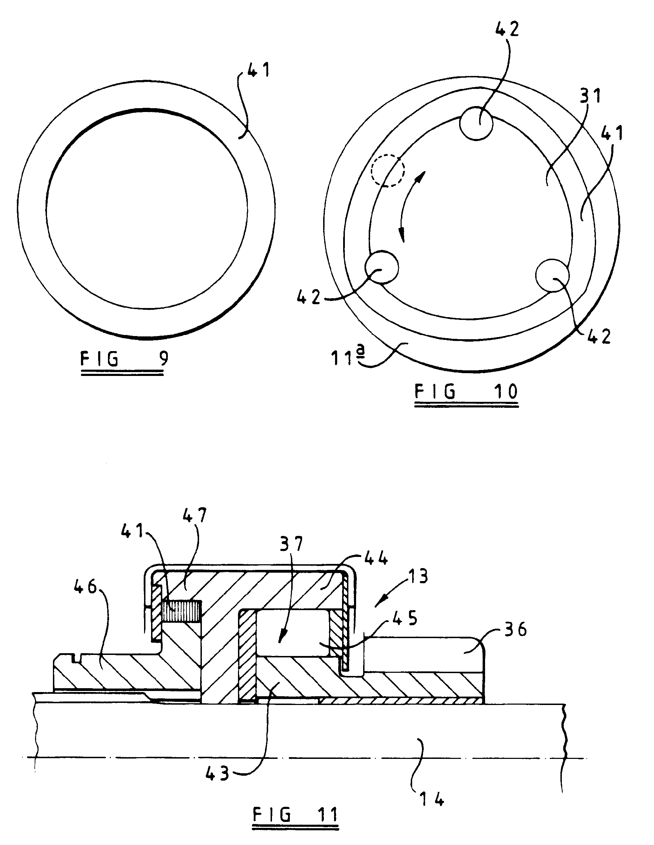

Figures 7, 8 and 9 illustrate a modification of the arrangement illustrated in Figures 5 and 6 wherein the annular gear 31 is unchanged, but instead of the body 11a and the rubber element 41 having mating ribs and grooves to prevent relative rotation, in the arrangement of Figure 7 and 8 the body 11a has an internal, non-circular shape corresponding to that of the outer periphery of the annular gear 31. Thus the interior of the body 11a has a cross-sectional shape which is effectively an equilateral triangle the sides of which are circular arcs of the same radius, but struck from different centres. The element 41 is a rubber sleeve of circular cross-section stretched slightly to fit over the annular gear 31 and thus the element 41 positions the annular gear 31 coaxially within the body 11a. Either the interface between the annular gear 31 and the element 41, or the interface between the element 41 and the body 11a, or both, is lubricated to permit relative rotation. As is clearly apparent from a comparison of Figures 7 and 8 relative rotation between the annular gear 31 and the body 11a must cause the "extrusion-type" distortion of the element 41 and so is resisted by the element 41. It will be recognised therefore that the torque limiting effect of the arrangement illustrated in Figures 7 and 8 is the same as that described above with reference to Figures 5 and 6. The rest state of the element 41 is indicated in Figure 9.

Figure 10 illustrates a modification of the arrangement illustrated in Figures 7, 8 and 9, but it is to be understood that the same modification could be applied to any of the other arrangements. In Figure 10 the apices of the outer periphery of the annular gear 31 carry rollers 42 which modify the sliding characteristic of the annular gear 31 within the rubber element 41. In particular the rollers 42 are intended to provide a smoother operation of the torque limiting device although of course they can be arranged to project beyond the pitch-circle of the apices of the annular gear 31 so as to press more deeply into the element 41, and thus increase the loading at which torque limiting occurs.

In all of the examples illustrated above the torque limiting device is incorporated into an epicyclic gear reduction mechanism of the starter motor. It should be recognised however that it is not essential that the torque limiting device is incorporated into the epicyclic gear reduction mechanism, and devices of the kind described above can find use, with appropriate minor modifications, in starter motors not having epicyclic gear reduction mechanisms.

Figure 11 illustrates the incorporation of a torque limiting device into the pinion drive assembly 13 of a starter motor, and it will be recognised that the pinion drive assembly 13 can form part of a wide variety of different types of starter motor. The pinion drive assembly comprises the pinion gear wheel 36 together with a uni-directional roller clutch 37, the assembly being supported for movement on the output shaft 14 of the starter motor. Where the starter motor is a conventional pre-engaged starter motor not equipped with a gear reduction mechanism then the shaft 14 may be an integral extension of the shaft 17. The output component of the roller clutch 37 is a cylindrical member 43 integral with the pinion gear wheel 36. The input member 44 of the roller clutch, which encircles the output member 43 and cooperates therewith through rollers 45 is normally coupled to the shaft 14 through a splined connection so that rotation of the shaft 14 can be transmitted to the clutch, while at the same time the pinion drive assembly can move axially on the shaft 14. However, when a torque limiting device is incorporated the clutch input member 44 is divided into two components, a driving component 46 in spined engagement with the shaft 14 and a collar 47 which encircles the driving component 46.

The collar 47 is integral with the portion of the input member of the clutch which encircles the output member 43. A rubber element 41 encircles the driving component 46 and occupies a circumferential gap between the inner periphery of the collar 47 and the outer periphery of the driving component 46. Any of the non-circular arrangements described above with reference to the torque limiting device applied to the epicyclic gear reduction mechanism can be utilised in the torque limiting device comprising the components 46, 47, and 41. Thus the outer perphery of the component 46 and/or the inner periphery of the collar 47 can be non-circular with controlled slip occurring either between the component 46 and the element 41, or between the element 41 and the collar 47, or both. It will be understood that in operation sudden torque loadings applied to the pinion gear wheel 36 by the ring gear of the engine, which are in the drive direction of the uni-directional clutch 37, may be accommodated by slippage of the torque limiting device 46, 41, 47 rather than being applied through the shaft 14 to the remainder of the starter motor.

Although the use of rubber for the element 41 is contemplated, it is to be understood that synthetic rubbers, and other synthetic resin materials may prove suitable.

## Claims

1. A torque limiting device comprising first and second relatively rotatable elements (38, 39), the first element (38) being hollow and receiving the second element (39) therein, characterized in that the outer periphery of the second element (39), and/or the inner periphery of the first element (38) is of non-circular cross-section so that the radial dimension of a gap defined between the outer periphery of the second element (39) and the inner periphery of the first element (38) is not constant during relative angular movement of the elements, the device further including an elastic component (41) in said gap between said first and second elements (38, 39), the, or at least one of the, non-circular peripheries being slidable relative to said elastic component (41) during normal operation of the device when the torque generating said relative angular movement exceeds a threshold value whereby said elastic component (41) is deformed during relative angular movement of the first and second elements (38, 39) and so resists said relative angular movement, and after sliding movement has occurred said elements are not restored by the elastic component to their original relative position.

2. A device as claimed in Claim 1 characterized in that said non-circular cross-section is substantially square.

3. A device as claimed in Claim 1 characterized in that said non-circular cross-section is substantially triangular.

4. A device as claimed in Claim 3 characterized in that said triangular shape has part-circular, convex, sides.

5. A device as claimed in any one of Claims 1 to 4 characterized in that said gap between said first and second elements (38, 39) is an annular gap and said elastic component (41) is in the form of a sleeve within which the outer periphery of said second element (39) is received.

6. A device as claimed in any of Claims 1 to 5 characterized in that the sliding interface of the elastic component (41) and the first or second element is lubricated.

7. A device as claimed in any one of Claims 1 to 6 characterized in that the apices of the member (38) which forms one part of the sliding interface are provided with rollers (42).

8. A starter motor characterized by incorporating a torque limiting device as claimed in any one of Claims 1 to 7 so as to limit torque transfer between the armature (18) of the starter motor and the pinion gear (36) of the starter motor.

9. A starter motor as claimed in Claim 8 characterized in that said device (38, 39, 41) is incorporated in an epicyclic gear reduction mechanism (26) of the starter motor.

10. A starter motor as claimed in Claim 8 characterized in that said device is incorporated in the axially movable pinion assembly (13) of the starter motor.

## Patentansprüche

1. Drehmomentbegrenzungsvorrichtung mit einem ersten und zweiten relativ zueinander drehbaren Element (38, 39), wobei das erste Element (38) hohl ausgebildet ist und das zweite Element (39) aufnimmt, **dadurch gekennzeichnet, daß** der Außenumfang des zweiten Elementes (39) und/oder der Innenumfang des ersten Elementes (38) einen nicht kreisförmigen Querschnitt besitzt, so daß die radiale Abmessung eines Spaltes zwischen dem Außenumfang des zweiten Elementes (39) und dem Innenumfang des ersten Elementes (38) während der relativen Winkelbewegung der Elemente nicht konstant ist, und daß die Vorrichtung des weiteren ein elastisches Teil (41) in dem Spalt zwischen dem ersten und zweiten Element (38, 39) aufweist, wobei der nicht kreisförmige Umfang oder mindestens ein nicht kreisförmiger Umfang während des Normalbetriebes der Vorrichtung, wenn das die relative Winkelbewegung erzeugende Drehmoment einen Grenzwert übersteigt, relativ zu dem elastischen Teil (41) gleiten kann, wobei das elastische Teil (41) während der relativen Winkelbewegung des ersten und zweiten Elementes (38, 39) verformt wird und somit der relativen Winkelbewegung widersteht und wobei nach dem Auftreten der Gleitbewegung die Elemente vom elastischen Teil nicht wieder in ihre ursprüngliche Ausgangslage zurückgebracht werden.

2. Vorrichtung nach Anspruch 1, **dadurch gekennzeichnet, daß** der nicht kreisförmige Querschnitt im wesentlichen quadratisch ist.

3. Vorrichtung nach Anspruch 1, **dadurch gekennzeichnet, daß** der nicht kreisförmige querschnitt im wesentlichen dreieckförmig ist.

4. Vorrichtung nach Anspruch 3, **dadurch gekennzeichnet, daß** die Dreiecksform teilkreisförmige konvexe Seiten besitzt.

5. Vorrichtung nach einem der Ansprüche 1 bis 4, **dadurch gekennzeichnet, daß** der Spalt zwischen dem ersten und zweiten Element (38, 39) ein Ringspalt ist und daß das elastische Teil (41) die Form einer Hülse besitzt, innerhalb der der Außenumfang des zweiten Elementes (39) aufgenommen ist.

6. Vorrichtung nach einem der Ansprüche 1 bis 5, **dadurch gekennzeichnet, daß** die Gleitgrenzfläche zwischen dem elastischen Teil (41) und dem ersten oder zweiten Element geschmiert ist.

7. Vorrichtung nach einem der Ansprüche 1 bis 6, **dadurch gekennzeichnet, daß** die Scheitelpunkte des Elementes (38), das einen Teil der Gleitgrenzfläche bildet, mit Rollen (42) versehen sind.

8. Anlasser, **dadurch gekennzeichnet, daß** er eine Drehmomentbegrenzungsvorrichtung nach einem der Ansprüche 1 bis 7 enthält, um die Drehmomentübertragung zwischen dem Anker (18) des Anlassers und dem Ritzel (36) des Anlassers zu begrenzen.

9. Anlasser nach Anspruch 8, **dadurch gekennzeichnet, daß** die Vorrichtung (38, 39, 41) in einen Epizykloiden-Reduktionsgetriebemechanismus (26) des Anlassers eingearbeitet ist.

10. Anlasser nach Anspruch 8, **dadurch gekennzeichnet, daß** die Vorrichtung in die axial bewegliche Ritzeleinheit (13) des Anlassers eingearbeitet ist.

## Revendications

1. Dispositif de limitation de couple comprenant des premier et second éléments (38, 39) à rotation relative, le premier élément (38) étant creux et le second élément (39) venant s'y loger, caractérisé en ce que la périphérie externe du second élément (39) et/ou la périphérie interne du premier élément (38) sont de section transversale non circulaire, si bien que la dimension radiale d'un espace libre défini entre la périphérie externe du second élément (39) et la périphérie interne du premier élément (38) n'est pas constante au cours du mouvement angulaire relatif des éléments, le dispositif englobant, en outre, un composant élastique (41) dans ledit espace libre entre lesdits premier et second éléments (38, 39), les périphéries non circulaires ou au moins une des périphéries non circulaires étant aptes à coulisser par rapport audit composant élastique (41) lors de la mise en service normale du dispositif lorsque le couple générant ledit mouvement angulaire relatif dépasse une valeur seuil, ce qui permet audit composant élastique (41) d'être déformé au cours du mouvement angulaire relatif des premier et second éléments (38, 39) et d'ainsi résister audit mouvement angulaire relatif, lesdits éléments ne reprenant pas leur position initiale relative à l'intervention du composant élastique au terme du mouvement de coulissement.

2. Dispositif selon la revendication 1, caractérisé en ce que ladite section transversale non circulaire est essentiellement carrée.

3. Dispositif selon la revendication 1, caractérisé en ce que ladite section transversale non circulaire est essentiellement triangulaire.

4. Dispositif selon la revendication 3, caractérisé en ce que ladite forme triangulaire comporte des côtés partiellement circulaires, convexes.

5. Dispositif selon l'une quelconque des revendications 1 à 4, caractérisé en ce que ledit espace libre entre lesdits premier et second éléments (38, 39) est un espace libre annulaire, et ledit composant élastique (41) a la forme d'un manchon à l'intérieur duquel vient se loger la périphérie externe dudit second élément (39).

6. Dispositif selon l'une quelconque des revendications 1 à 5, caractérisé en ce que l'interface de coulissement du composant élastique (41) et du premier ou du second élément est lubrifiée.

7. Dispositif selon l'une quelconque des revendications 1 à 6, caractérisé en ce que les sommets de l'élément (38) qui fait partie de l'interface de coulissement sont équipés de galets (42).

8. Démarreur caractérisé par l'incorporation d'un dispositif de limitation de couple, tel que revendiqué dans l'une quelconque des revendications 1 à 7, de façon à limiter le transfert de couple entre l'induit (18) du démarreur et le pignon (36) du démarreur.

9. Démarreur selon la revendication 8, caractérisé en ce que ledit dispositif (38, 39, 41) est incorporé dans un mécanisme de réduction (26) à engrenage planétaire du démarreur.

10. Démarreur selon la revendication 8, caractérisé en ce que ledit dispositif est incorporé dans l'assemblage de pignon (13) du démarreur, mobile en direction axiale.
